# EUROPÄISCHE PATENTSCHRIFT

(11) **EP 0 775 670 B1**
(45) Veröffentlichungstag und Bekanntmachung des Hinweises auf die Patenterteilung: **13.10.1999**
(21) Anmeldenummer: 96118308.4
(22) Anmeldetag: 15.11.1996
(51) Int. Cl.: C01B 35/12, C01B 33/38, B01J 21/00, B01J 20/10, C09C 1/40, C09C 1/36, C09C 1/28, C11D 3/12, C04B 14/04, C09D 5/04, C10M 103/06, D21H 17/68, A01N 25/08, B01J 39/14, C04B 35/63, C04B 35/16, C08K 3/34, B01D 71/02

(54) **Kristallines Silikatpulver**
Crystalline silicate powder
Poudre de silicate cristallin

(30) Priorität: 24.11.1995 DE 19543848
(43) Veröffentlichungstag der Anmeldung: 28.05.1997
(73) Patentinhaber: BASF AKTIENGESELLSCHAFT, 67056 Ludwigshafen (DE)
(72) Erfinder: Müller, Ulrich, Dr., 67434 Neustadt (DE); Gies, Hermann, Prof. Dr., 45549 Sprockhövel (DE); Siegmann, Silvester, 44867 Bochum (DE); Vortmann, Silke, 45239 Essen (DE)

(56) Entgegenhaltungen:
- EP-A- 0 436 835

## Beschreibung

Die Erfindung betrifft neuartige synthetische Schichtsilikate der Bezeichnung RUB-18, deren Herstellung und Verwendung.

In der Natur kennt man im Bereich der Tone sehr viele Alumosilikate und Silikate mit Schichtstruktur (Angew. Chemie 80 (1968) 736 bis 747).

Technischen Einsatz finden solche Schichtsilikate, insbesondere Bentonite, aufgrund ihrer Quellfähigkeit mit Wasser oder organischen Lösungsmitteln zur Thixotropierung z.B. von Farbpasten, Lacken, Schmierfetten, Kunststoffen und Kosmetika. Darüberhinaus werden diese billigen Naturstoffe eingesetzt zur adsorptiven Entfärbung von Ölen, Fetten und Wachsen, aufgrund ihres Schichtaufbaus als Bohrhilfsmittel und im Spezialtiefbau, als Zuschlagstoff für Papier, zur adsorptiven Entfernung von z.B. Geruchsbildnern oder Gefahrstoffen aus Gasen und Flüssigkeiten, als Waschmittelzusatz, in der Tierhaltung als Geruchsbinder sowie als Futtermittelzusatz und als Flockungs- und Fällungsmittel in der Abwasserreinigung.

Sauer aktivierte Bentonite können nach einer Waschbehandlung mit Mineralsäuren auch Anwendung finden als Katalysatoren in der Chemischen Industrie und Erdölverarbeitung. Alkylierungen von Phenol nennt beispielsweise US-A-5,171,896, Aminierungen von Ethylenoxid zu Alkanolaminen lehrt EP-A-375 267.

Da natürlich vorkommende Schichtsilikate im Tagebau gefördert werden ergibt sich je nach Lagerstätte der Nachteil, daß die chemische Zusammensetzung und damit die Eigenschaften z.B. der daraus gefertigten Katalysatoren Schwankungen unterworfen ist.

Der vorliegenden Erfindung lag daher die Aufgabe zugrunde, den zuvor genannten Nachteile abzuhelfen.

Demgemäß wurden neue und verbesserte kristalline Festkörper von Bor-, Aluminium-, Gallium-, Germanium-, Zink-, Zinn-, Eisen-, Titan-, Vanadinsilikaten oder deren Gemische mit RUB-18 Struktur gefunden, welche dadurch gekennzeichnet sind, daß sie innerhalb einer kristallographischen Raumgruppe von I4_{1/a}md vorliegen und ein Röntgenbeugungsmuster aufweisen, in dem mindestens die folgenden Reflexe (hkl) bei den angegebenen Beugungswinkeln auf treten:

| h | k | l | Intensität I/Iₒ | Beugungswinkel 2 Theta |
|---|---|---|---|---|
| 0 | 0 | 4 | sehr stark | 7,97 |
| 1 | 0 | 1 | mittel | 12,23 |
| 1 | 0 | 7 | stark | 18,51 |
| 1 | 0 | 9 | stark | 21,74 |
| 2 | 0 | 2 | mittel | 24,61 |
| 2 | 0 | 4 | stark | 25,59 |
| 2 | 0 | 6 | mittel | 27,15 |
| 2 | 1 | 3 | mittel | 27,87 |
| 2 | 0 | 8 | stark | 29,21 |
| 2 | 1 | 7 | stark | 30,70 |

deren Herstellung und Verwendung.

Die kristallinen Festkörper mit RUB-18 Struktur können wie folgt erhalten werden:

Die neuartigen kristallinen Festkörper mit RUB-18 Struktur entstehen, wenn man dem Syntheseansatz noch Cäsium, Natrium oder deren Gemische, bevorzugt als Cäsiumoxid oder Natriumoxid, besonders bevorzugt Cäsiumoxid im Molverhältnis von Cs/Na zu Si von 0,45:1 bis 0,15:1, bevorzugt 0,4:1 bis 0,18:1, besonders bevorzugt 0,25:1 bis 0,20:1 zufügt. Das molare Verhältnis von Si/(Si+A) [A = Bor, Aluminium, Gallium, Germanium, Zink, Zinn, Eisen, Titan oder Vanadin] beträgt in der Regel 0,2:1 bis 2:1, bevorzugt 0,5:1 bis 1,5:1, besonders bevorzugt 0,8:1 bis 1:1.

Es ist vorteilhaft, im Synthesegel vor dem Beginn der Kristallisation das Molverhältnis von SiO₂/(Na₂O + Cs₂O) auf 1:1 bis 15:1, bevorzugt 2:1 bis 5:1, das Molverhältnis von H₂O/SiO₂ auf 15:1 bis 150:1, bevorzugt 20:1 bis 45:1 und das Molverhältnis von Hexamethylentetramin/SiO₂ auf 0,04:1 bis 0,95:1, bevorzugt 0,5:1 bis 0,7:1 einzustellen.

Die Kristallisation kann bei Temperaturen von 50 bis 250°C, bevorzugt 80 bis 150°C, besonders bevorzugt 90 bis 100°C erfolgen. Die Kristallisationszeit beträgt in der Regel 3 bis 4 Wochen. Zur Erhöhung der Kristallinität und zur Verbesserung der Kristallmorphologie kann wahlweise noch Triethanolamin zugesetzt werden.

Nach der Kristallisation kann die erfindungsgemäße Phase nach an sich bekannten Methoden abfiltriert, gewaschen und beispielsweise bei 100 bis 120°C getrocknet werden.

Das solcherart erfindungsgemäße Schichtsilikat ergibt das in Tabelle 1 angegebene Röntgendiffraktogramm mit einer Zuordnung zu einer Raumgruppensymmetrie I4_{1/a}md und den Abmessungen der Elementarzelle von a = 7,326 Å und c = 44,283 Å.

Zur Entfernung des in dem Produkt noch vorliegenden Hexamethylentetramins kann das erfindungsgemäße Material noch einer thermischen Behandlung an Luft oder unter Stickstoff unterzogen werden. Dabei ist es vorteilhaft das Abbrennen des Templates (Hexamethylentetramin) unter Bedingungen vorzunehmen, die den Temperaturanstieg auf Werte unter 350°C begrenzen.

Zur Modifizierung des erfindungsgemäßen Silikates RUB-18 können alle bekannten Methoden der Verformung, des Ionenaustausches und/oder der Imprägnierung mit Metall-, Edelmetall- oder Alkali- und Erdalkalimetalle, der Oberflächenmodifizierung, beispielsweise über CVD, oder Derivatisierungen aktiver Zentren verwendet werden.

Zur Verstärkung der Azidität können die bekannten Methoden z.B. der Aktivierung mit Mineralsäuren oder der Derivatisierung mit Fluorsulfonsäure eingesetzt werden. Ebenso können Heteropolysäuren eingesetzt werden.

Eine verstärkte Hydrophobisierung kann erreicht werden, indem das Material beispielsweise silyliert wird.

Die erfindungsgemäßen kristallinen Festkörper mit RUB-18 Struktur eignen sich beispielsweise als Katalysatoren, Katalysatorträger oder deren Binder, als Sorptionsmittel, Pigmente, Zusatzstoff in Waschmitteln, Zusatz zu Baustoffen, Filterhilfsmittel, zur Thixotropierung in Farbpasten und Lacken, sowie Anwendungen als Gleit- und Schmierstoff, als Flammschutz, Hilfs- und Füllstoff in Papiererzeugnissen, in bakterizid und/oder fungizid und/oder herbizid wirksamen Zusammensetzungen, zum Ionenaustausch, zur Herstellung von Keramiken, in Polymeren, in elektronischen, optischen oder elektrooptischen Bauteilen, Schaltelementen oder Sensoren, in Membranen und/oder zur Stofftrennung.

Als Anwendungen der neuartigen Materialien in der Katalyse sind solche Reaktionen vorteilhaft wie Hydrierungen, Dehydrierungen, Oxidehydrierungen, Oxidationen, Epoxidationen, Polymerisationsreaktionen, Aminierungen, Hydratisierungen und Dehydratisierungen, nukleophile und elektrophile Substitutionsreaktionen, Additions- und Eliminationsreaktionen, Doppelbindungs-und Skelettisomerisierungen, Dehydrocyclisierungen, Hydroxylierungen von Heteroaromaten, Epoxid- Aldehydumlagerungen, sowie Kondensationsreaktionen vom Typ der Aldolkondensationen.

Ebenso dient das erfindungsgemäße Material, gegebenenfalls noch modifiziert mit Cu oder Metallen der Pt-Gruppe als Katalysator oder Träger zur katalytischen Abgasbehandlung in DeNOₓ- oder DeSOₓ-Verfahren.

Abhängig vom umzusetzenden Molekül können die katalytischen Reaktionen vorteilhaft in Gas- oder Flüssigphase, oder aber auch in überkritischer Phase durchgeführt werden.

Bei der Anwendung als Sorptionsmittel und zum Ionenaustausch kann man vorteilhafterweise die innere Oberfläche des erfindungsgemäßen Materials ausnutzen z.B. für chromatografische Zwecke, aber auch Moleküle aufgrund ihres Unterschiedes in der Molekülgröße voneinander trennen. Dabei werden insbesondere kleine Moleküle mit kinetischen Durchmessern von 4 bis 6 Å bevorzugt adsorbiert.

Je nach Molekül kann die Adsorption in Gas- oder Flüssigphase erfolgen. Desaktivierte Katalysatoren oder Adsorbentien des erfindungsgemäßen Silikats können durch kontrolliertes Abbrennen von Kohlenstoffbelegungen im Temperaturbereich von 200 bis 350°C wieder in eine aktive Form zurückgeführt werden.

### Beispiele

### Beispiel 1

In einem mit Teflon ausgekleideten Stahlautoklaven wurden 5,18 g Na₂Si₃O₇, 0,11 g NaOH, 0,31 g Cs₂O als 2-molare Lösung in Wasser, 4,19 g Hexamethylentetramin und 24,48 g deionisiertes Wasser vorgelegt. Das entstandene Gel wurde für die Dauer von 3 Wochen bei 95°C kristallisiert. Anschließend wurde der entstandene Feststoff abfiltriert, mit Wasser neutral gewaschen und bei 120°C innerhalb von 10 Stunden getrocknet.

Das Syntheseprodukt wies das in Tabelle 1 gezeigte für RUB-18 typische Röntgendiffraktogramm auf.

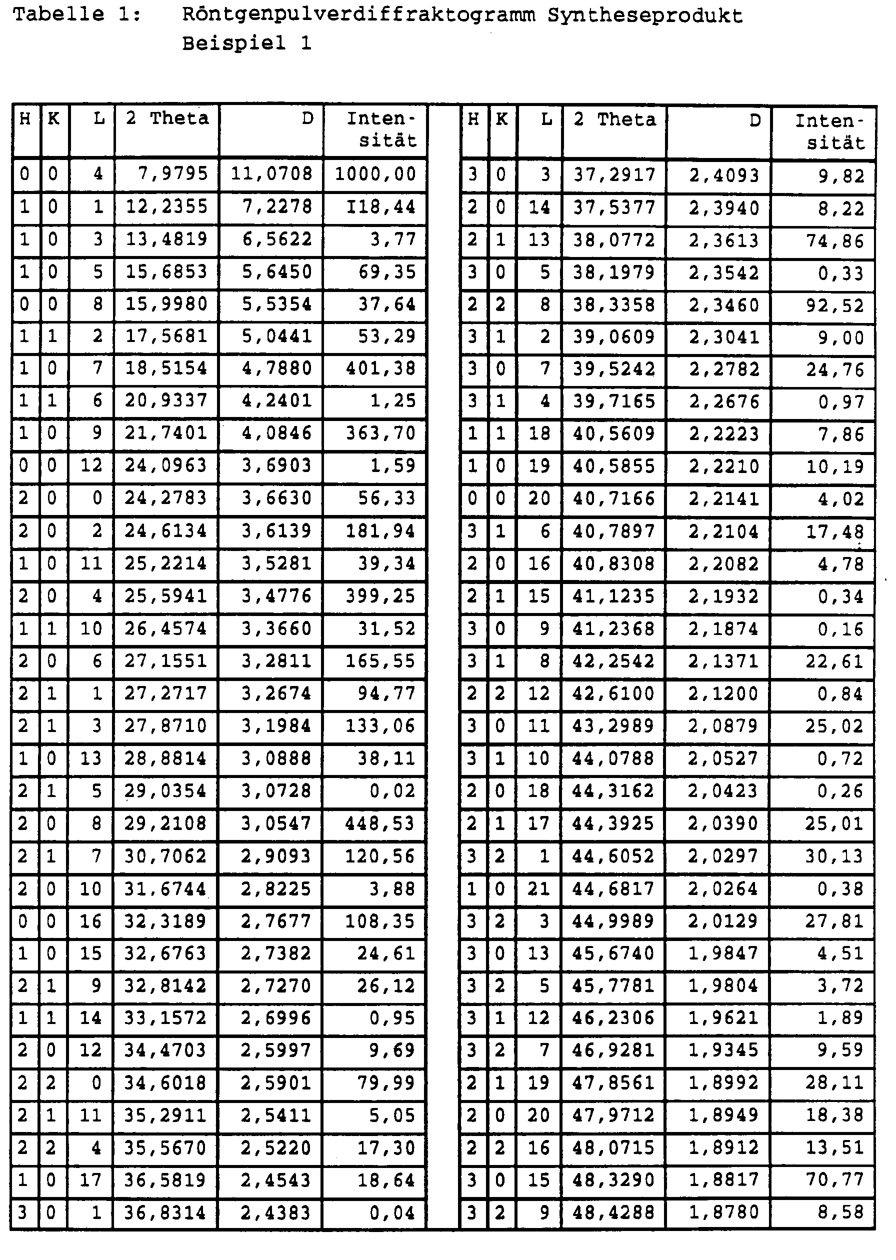

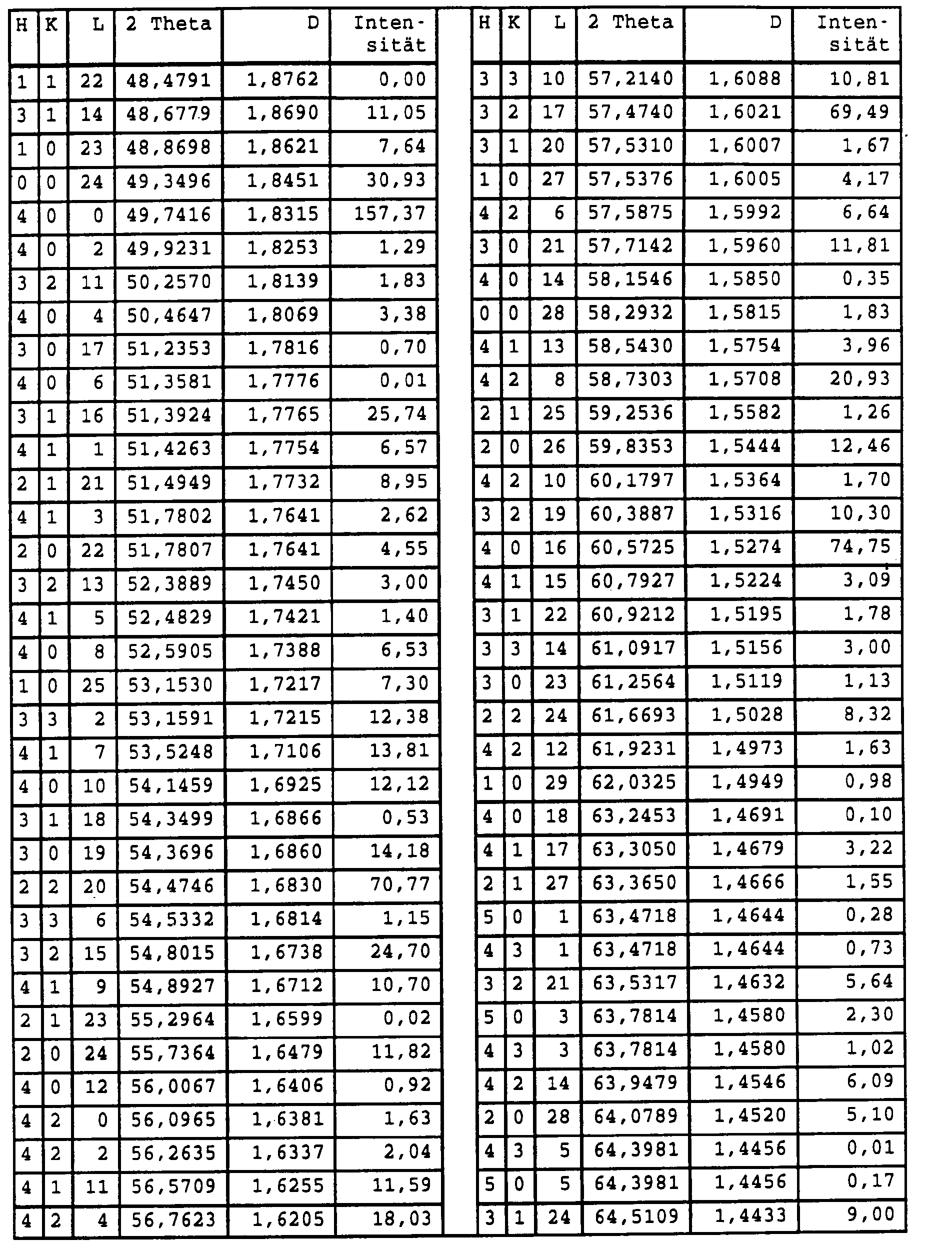

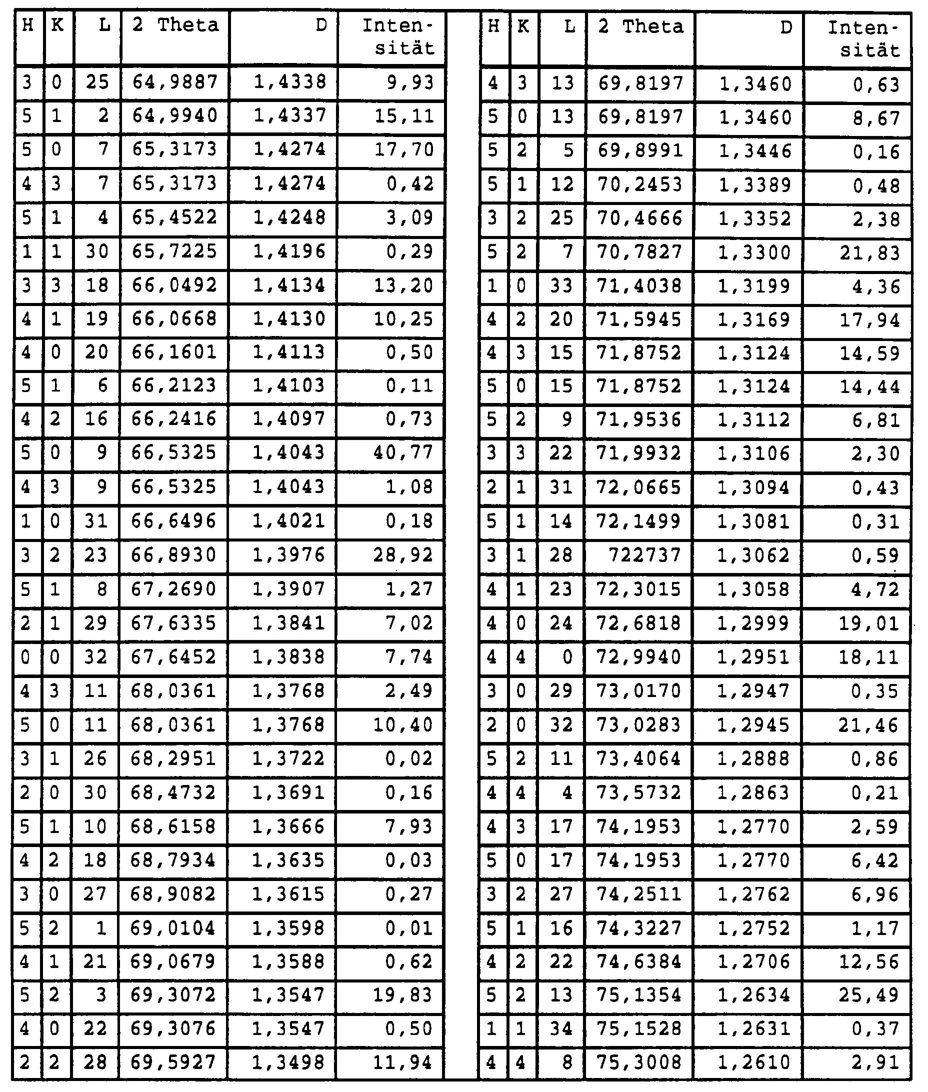

## Patentansprüche

1. Kristalline Festkörper von Bor-, Aluminium-, Gallium-, Germanium-, Zink-, Zinn-, Eisen-, Titan-, Vanadinsilikaten oder deren Gemische mit RUB-18 Struktur, dadurch gekennzeichnet, daß sie innerhalb einer kristallographischen Raumgruppe von I4_{1/a}md vorliegen und ein Röntgenbeugungsmuster aufweisen, in dem mindestens die folgenden Reflexe (hkl) bei den angegebenen Beugungswinkeln auftreten:
| h | k | l | Intensität I/Iₒ | Beugungswinkel 2 Theta |
|---|---|---|---|---|
| 0 | 0 | 4 | sehr stark | 7,97 |
| 1 | 0 | 1 | mittel | 12,23 |
| 1 | 0 | 7 | stark | 18,51 |
| 1 | 0 | 9 | stark | 21,74 |
| 2 | 0 | 2 | mittel | 24,61 |
| 2 | 0 | 4 | stark | 25,59 |
| 2 | 0 | 6 | mittel | 27,15 |
| 2 | 1 | 3 | mittel | 27,87 |
| 2 | 0 | 8 | stark | 29,21 |
| 2 | 1 | 7 | stark | 30,70 |

2. Kristalline Festkörper mit RUB-18 Struktur nach Anspruch 1, dadurch gekennzeichnet, daß das Molverhältnis von Si/(Si+A), in der A für Bor, Aluminium, Gallium, Germanium, Zink, Zinn, Eisen, Titan, Vanadin oder deren Gemische steht, 0,2:1 bis 2:1 beträgt.

3. Kristalline Festkörper mit RUB-18 Struktur nach Anspruch 1, dadurch gekennzeichnet, daß das Molverhältnis von Si/(Si+A), in der A für Bor, Aluminium, Gallium, Germanium, Zink, Zinn, Eisen, Titan, Vanadin oder deren Gemische steht, 0,5:1 bis 1,5:1 beträgt.

4. Kristalline Festkörper mit RUB-18 Struktur nach Anspruch 1, dadurch gekennzeichnet, daß das Molverhältnis von Si/(Si+A), in der A für Bor, Aluminium, Gallium, Germanium, Zink, Zinn, Eisen, Titan, Vanadin oder deren Gemische steht, 0,8:1 bis 1:1 beträgt.

5. Kristalline Festkörper mit RUB-18 Struktur nach Anspruch 1, dadurch gekennzeichnet, daß Silicium teilweise durch Bor, Aluminium, Gallium, Eisen, Zink, Vanadin, Titan, Zinn oder Germanium ersetzt sein kann.

6. Verwendung der kristalline Festkörper mit RUB-18 Struktur nach Anspruch 1 als Katalysatoren, Katalysatorträger oder deren Binder, als Sorptionsmittel, Pigmente, Zusatzstoff in Waschmitteln, Zusatz zu Baustoffen, Filterhilfsmittel, zur Thixotropierung in Farbpasten und Lacken, sowie Anwendungen als Gleit- und Schmierstoff, als Flammschutz, Hilfs- und Füllstoff in Papiererzeugnissen, in bakterizid und/oder fungizid und/oder herbizid wirksamen Zusammensetzungen, zum Ionenaustausch, zur Herstellung von Keramiken, in Polymeren, in elektronischen, optischen oder elektrooptischen Bauteilen, Schaltelementen oder Sensoren, in Membranen und/oder zur Stofftrennung.

## Claims

1. A crystalline solid comprising boron silicate, aluminum silicate, gallium silicate, germanium silicate, zinc silicate, tin silicate, iron silicate, titanium silicate or vanadium silicate or a mixture thereof, having the RUB-18 structure, which solid has the crystallographic space group I4_{1/a}md and an X-ray diffraction pattern in which at least the following reflections (hkl) occur at said diffraction angles:
| h | k | l | Intensity I/I₀ | Diffraction angle 2 theta |
|---|---|---|---|---|
| 0 | 0 | 4 | very strong | 7.97 |
| 1 | 0 | 1 | medium | 12.23 |
| 1 | 0 | 7 | strong | 18.51 |
| 1 | 0 | 9 | strong | 21.74 |
| 2 | 0 | 2 | medium | 24.61 |
| 2 | 0 | 4 | strong | 25.59 |
| 2 | 0 | 6 | medium | 27.15 |
| 2 | 1 | 3 | medium | 27.87 |
| 2 | 0 | 8 | strong | 29.21 |
| 2 | 1 | 7 | strong | 30.70 |

2. A crystalline solid having the RUB-18 structure as claimed in claim 1, wherein the Si/(Si+A) molar ratio, where A is boron, aluminum, gallium germanium, zinc, tin, iron, titanium or vanadium or a mixture thereof, is from 0.2:1 to 2:1.

3. A crystalline solid having the RUB-18 structure as claimed in claim 1, wherein the Si/(Si+A) molar ratio, where A is boron, aluminum, gallium, germanium, zinc, tin, iron, titanium, vanadium or a mixture thereof, is from 0.5:1 to 1.5:1.

4. A crystalline solid having the RUB-18 structure as claimed in claim 1, wherein the Si/(Si+A) molar ratio, where A is boron, aluminum, gallium, germanium, zinc, tin, iron, titanium, vanadium or a mixture thereof, is from 0.8:1 to 1:1.

5. A crystalline solid having the RUB-18 structure as claimed in claim 1, wherein some of the silicon may be replaced by boron, aluminum, gallium, iron, zinc, vanadium, titanium, tin or germanium.

6. The use of a crystalline solid having the RUB-18 structure as claimed in claim 1 as catalysts, catalyst supports or binders thereof, as sorbents, pigments, additives in detergents, additives in building materials, as filter assistants, for imparting thixotropic properties to color pastes and surface coatings and for applications as antifriction materials and lubricants, as flame proofing agents, as assistants and fillers in paper products, in bacteriocidally and/or fungicidally and/or herbicidally active compositions, for ion exchange, for the production of ceramics, in polymers, in electronics, optical or electrooptical components, switching elements or sensors, in membranes and/or for the separation of substances.

## Revendications

1. Solides cristallisés à base de silicates de bore, d'aluminium, de gallium, de germanium, de zinc, d'étain, de fer, de titane, de vanadium ou leurs mélanges ayant une structure RUB-18, caractérisés par le fait qu'ils se situent à l'intérieur d'un groupe spatial cristallographique de I4_{1/a}md et présentent un type de diffraction des rayons X dans lequel se produisent au moins les reflets suivants (hkl) avec les angles de diffraction indiqués:
| h | k | l | Intensité I/I₀ | Angle de diffraction 2 Thêta |
|---|---|---|---|---|
| 0 | 0 | 4 | très forte | 7,97 |
| 1 | 0 | 1 | moyenne | 12,23 |
| 1 | 0 | 7 | forte | 18,51 |
| 1 | 0 | 9 | forte | 21,74 |
| 2 | 0 | 2 | moyenne | 24,61 |
| 2 | 0 | 4 | forte | 25,59 |
| 2 | 0 | 6 | moyenne | 27,15 |
| 2 | 1 | 3 | moyenne | 27,87 |
| 2 | 0 | 8 | forte | 29,21 |
| 2 | 1 | 7 | forte | 30,70 |

2. Solides cristallisés ayant une structure RUB-18 selon la revendication 1, caractérisés par le fait que le rapport molaire de Si/(Si+A), dans lequel A représente le bore, l'aluminium, le gallium, le germanium, le zinc, l'étain, le fer, le titane, le vanadium ou leurs mélanges, vaut de 0,2:1 à 2:1.

3. Solides cristallisés ayant une structure RUB-18 selon la revendication 1, caractérisés par le fait que le rapport molaire de Si/(Si+A), dans lequel A représente le bore, l'aluminium, le gallium, le germanium, le zinc, l'étain, le fer, le titane, le vanadium ou leurs mélanges, vaut de 0,5:1 à 1,5:1.

4. Solides cristallisés ayant une structure RUB-18 selon la revendication 1, caractérisés par le fait que le rapport molaire de Si/(Si+A), dans lequel A représente le bore, l'aluminium, le gallium, le germanium, le zinc, l'étain, le fer, le titane, le vanadium ou leurs mélanges, vaut de 0,8:1 à 1:1.

5. Solides cristallisés ayant une structure RUB-18 selon la revendication 1, caractérisés par le fait que le silicium peut être remplacé partiellement par du bore, de l'aluminium, du gallium, du fer, du zinc, du vanadium, du titane, de l'étain ou du germanium.

6. Utilisation des solides cristallisés ayant une structure RUB-18 selon la revendication 1 comme catalyseurs, supports de catalyseurs ou leurs liants, comme agents de sorption, pigments, additifs dans des lessives, additif à des matériaux de construction, adjuvants de filtration, pour produire un effet thixotrope dans des couleurs d'impression et des laques, ainsi que des applications comme agents antifriction et lubrifiants, comme agent ignifigeant, comme adjuvants et charges dans des produits à base de papier, dans des compositions à activité bactéricide et/ou fongicide et/ou herbicide, pour l'échange d'ions, pour la préparation de céramiques, dans des polymères, dans des éléments structuraux électroniques, optiques ou électro-optiques, des éléments de commutation ou des capteurs, dans des membranes et/ou pour la séparation de substances.
